# EUROPEAN PATENT SPECIFICATION

(11) **EP 1 243 776 B1**
(45) Date of publication and mention of the grant of the patent: **04.05.2005**
(21) Application number: 01830165.5
(22) Date of filing: 13.03.2001
(51) Int. Cl.: F02D 19/08

(54) **Combined control of dual fuel system for diesel cycle engines**
Kombinierte Steuerung eines Zweikraftstoffsystems für nach dem Dieselverfahren arbeitende Brennkraftmaschinen
Système de commande combinée d'alimentation de bi-carburant pour moteur à cycle diesel

(43) Date of publication of application: 25.09.2002
(73) Proprietor: Etra S.p.A. Ecologic Transportation Systems, 38068 Rovereto (Trento) (IT)
(72) Inventor: Pizzinini, Roberto, 38100 Romagnano (Trento) (IT)
(74) Representative: Ponchiroli, Simone

(56) References cited:
- EP-A- 0 095 444
- DE-A- 2 301 307
- GB-A- 2 122 681
- GB-A- 2 166 267
- US-A- 5 060 610
- US-A- 5 370 097
- US-A- 5 526 786
- US-A- 5 553 575

## Description

The present invention relates to a combined fuel system for Diesel cycle engines comprising the characteristics expressed in the preamble to Claim 1.

The subject system is destined to be mounted on Diesel cycle engines to obtain the dual benefit of limited fuel consumption and low pollution.

This system is destined to be applied both during the production phase on new vehicles and on previously manufactured vehicles, without requiring any modifications to the existing engines.

As is well known, Diesel cycle engines equipped with a combined fuel system can alternatively run with a mixture composed of fuel oil and air or with a mixture composed of fuel oil, gas (such as methane or LPG) and air.

In combined fuel systems, during the intake phase a mixture of air and gas is aspirated while subsequently, shortly before the end of the compression phase, a small quantity of fuel oil is introduce into the combustion chamber through the normal injector pump set. The fuel oil thereby starts the combustion of the compressed mixture by its own spontaneous ignition replacing, in practice, the plugs of classic Otto cycle engines.

A first embodiment is disclosed in European Patent no. 95444, and it provides for the use of a mixing assembly positioned along the air intake duct to the cylinders provided with two separate ducts, and of a device to intercept the travel of the control lever of the fuel oil injection pump.

A first duct of the mixing assembly is provided with a butterfly valve able to move between two extreme positions of opening and closing of the air passage port in correspondence with the operation of the engine respectively with fuel oil and with fuel oil-gas.

The second duct of the mixing assembly is provided with a Venturi tube connected with a low pressure gas supply pipeline and with a butterfly valve to shut off the passage port connected to the acceleration command.

When the system is set for combined fuel operation, the shut off device limits the travel of the control lever of the fuel oil injection pump, allowing the injection of a minimal quantity of fuel oil into the cylinders, sufficient to keep the engine idling. Moreover, by effect of the aforesaid connection between the butterfly valve of the second conduit of the mixer assembly and the acceleration command, the air passage port is opened according to the position of the acceleration command and consequently a quantity of gas corresponding to the value required by the engine is drawn by the Venturi tube.

This first known type of system, however, presents some drawback.

A first drawback is represented by an abrupt and irregular operation of the engine especially in correspondence with the switch between the two possible conditions of operation with fuel oil and with fuel oil - gas.

An additional drawback resides in the fact that in correspondence with a decreased demand for power (due for instance to a release of the acceleration command) this type of system is subject to needless gas wastage which entails, in addition to excessive consumption, also an undesired pollution linked to the fact that the quantity of excess gas is not oxidised but is released into the atmosphere.

A second known type of systems is described in Italian Patent no. 1299645.

This patent describes a combined fuel oil and fuel-oil system for Diesel cycle engines in which a mixing assembly obtained with a Venturi tube is positioned along the air intake duct and is connected to a gas tank through an inlet conduit.

The Venturi tube thus causes the gas to be sucked into the air intake duct.

Along the gas inlet conduit are mounted means for regulating the gas flow rate and, in proximity to the gas tank, a pressure reducer.

In this case as well, to the fuel oil injection pump are associated throttling means constituted by an end stop with variable position, borne by a support arm. The end stop comes in contact against the control lever of the injection pump, limiting its travel.

Structurally, the control lever and the arm that bears the end stop are both engaged to rotate about the same axis, so that the end stop determines the arc that the control lever can describe.

The subject system also provides for the use of an electronic unit placed in communication with a device for measuring the number of revolutions of the drive shaft, with a device for detecting the position of the acceleration command, and operatively active to regulate the flow of fuel oil towards the engine, during its operation with fuel oil - gas, according to the number of revolutions of the engine and to the position of the acceleration command.

The flow of gas instead depends on the position of the acceleration command.

This second known technique, however, has a series of drawbacks.

In the first place when the engine, whereto system in question is applied, reaches a high number of revolutions per minute it starts chugging due to the production of unburned compounds

Secondly, in this solution as well, in correspondence with a decreased demand for power the system is subject to needless gas wastage leading to excessive consumption, associated to undesired pollution.

Additionally, the solution that provides for the use, in order to limit the travel of the pump control lever, of an end stop supported by an arm engaged to rotate about the same axis as the control lever, entails considerable difficulties in mounting the system, particularly on previously manufactured vehicles.

The mounting operation must be performed with accurate precision, because even small offsets between the axis of rotation of the control lever and the axis of rotation of the arm bearing the end stop entail large problems in controlling the operation of the system.

A third example of know dual fuel system is disclosed in US 5,370,097.

US 5,370,097 discloses a system for the combined supply of fuel to diesel cycle engines in which a control unit is in communication with a first detector of the number of revolutions, and with a device for detecting the position of the acceleration command. The control unit regulates the supply of the first and second fuel to the cylinders as a function of the number of revolutions of the engine and of the position of said acceleration command.

In particular the supply of the first fuel is done according to a first mapping set on said control unit and providing for a plurality of possible operating conditions as a function of the position of the acceleration command and of specific values of the number of engine revolutions.

In this situation the technical task at the basis of the present invention is to provide a system for the combined supply of fuel to Diesel cycle engines which overcomes the aforementioned drawbacks.

In particular, the technical task of the present invention is to provide a system for the combined supply of fuel to Diesel cycle engines which guarantees a smooth operation of the engine even at high numbers of revolutions per

minute.

A further technical task of the present invention is to provide a system for the combined supply of fuel to Diesel cycle engines that allows to avoid needless gas consumption and undesired pollution.

The specified technical task and the indicated aims are substantially achieved by a system for the combined supply of fuel to Diesel cycle engines, as described in the claims that follow.

Further features and advantages of the invention shall become more readily apparent from the detailed description that follows of a preferred, but not exclusive, embodiment of a system for the combined supply of fuel to Diesel cycle engines, illustrated in the accompanying drawings, in which:
- Figure 1 shows a first embodiment of the system of the present invention applied to a non-supercharged engine;
- Figure 2 shows a second embodiment of the system of the present invention applied to a turbo-charged engine;
- Figure 3 shows a third embodiment of the system of the present invention applied to a single-point engine;
- Figure 4 shows a fourth embodiment of the system of the present invention applied to a multi-point engine;
- Figure 5 shows a possible mapping of the percentage of opening of the injection pump as a function of engine revolutions, as the position of the acceleration command varies respectively from 0 to 100% of its maximum travel;
- Figure 6 shows a possible mapping of the percentage of opening of the flow rate of the second fuel, as a function of engine revolutions, as the position of the acceleration command varies respectively from 0 to 100% of its maximum travel.

With reference to the aforementioned figures, the reference numbers 1 and 2 globally indicate respectively a system for the combined supply of fuel to Diesel cycle engines and a Diesel cycle engine.

The engine 2 comprises a plurality of cylinders 3 operatively connected to a drive shaft (not shown) for the operation of the vehicle.

The fuel supply system 1 comprises a first tank 4 for a first fuel and a second tank 5 for a second fuel.

Advantageously the first fuel can be constituted by fuel oil, fuel oil with additives of any kind, bio-diesel or other equivalent fuels. Bio-diesel means a type of Diesel fuel of vegetable and not mineral origin.

In particular said first fuel can be constituted by the so-called white fuel, distinguished commercially with the mark GECAM, and constituted by an emulsion of fuel oil, water and additives.

In regard to the second fuel, it can advantageously be constituted a low pollution fuel such as preferably methane or LPG.

The system 1 comprises an air intake duct 6 to the cylinders 3 and an injection pump 7 connected between the first tank 4 and the cylinders 3 to supply the first fuel to the cylinders 3, in known ways.

The operation of the engine 2 by a user fundamentally takes place through two distinct controls: an acceleration command 8 (such as a pedal) able to be operated from a position of minimum demand for power from the engine 2 to a position of maximum demand for power from the engine 2, and a selector 9 (for instance a pushbutton) of the operation of the engine 2 able to be switched between a first position, corresponding to an operation of the engine 2 only with the first fuel, and a second position, corresponding to an operation of the engine 2 with both fuels.

A device 10 for detecting the position of the acceleration command 8 (for instance a potentiometer) is then connected to an electronic control unit 11 destined to manage the operation of the engine 2 completely.

Also the selector 9 of the operation of the engine 2 is connected to the control unit 11 to communicate the operating mode desired by the user.

The control unit 11 is also in communication with a gear control 12, with a first device 13 for measuring the number of revolutions of the engine 2 and with a sensor 14 of the cooling water of the engine 2, mounted on the radiator 46.

The control unit 11 comprises two parts, a control part 15 and a power part 16.

The unit 11 also commands regulating means 17 destined to regulate the supply of the first fuel towards the cylinders 3.

Said regulating means 17 comprise a lever 18 for controlling the injection pump 7 able to be actuated along a regulating travel from a position of minimum supply of the first fuel to a position of maximum supply of the first fuel, mechanical transmission means 19 connected between the acceleration command 8 and the control lever 18, and limiting means 20 destined to limit the travel of pump 7 varying the position of maximum supply.

The limiting means 20 comprise an actuator 21 controlled by the control unit 11 and movable from a position of non interference in which the travel of the control lever 18 is greatest, to a maximum cut-off position in which the travel of the control lever 18 is smallest.

Between the actuator 21 and the control lever 18 is connected a compensating element 22 to allow the movement of the control lever 18 between the position of minimum supply and the position of maximum supply determined by the actuator 21.

In the embodiment illustrated in the accompanying drawings, the compensating element 22 is constituted by a cylinder 23 connected to the actuator 21, and by a piston 24 inserted in sliding fashion in the cylinder 23 and connected to the control lever 18.

To facilitate the mounting operations of the actuator 21 onto existing vehicles, the compensating element 22 can also comprise an adjustment organ 25, for instance a screw, to adapt the length of the compensation element 22 to the actual distance between the actuator 21 and the control lever 18.

Once the position of the actuator 21 and consequently of the cylinder 23 is established by the control unit 11, the piston 24 can then move along the entire cylinder 23 and consequently the control lever 18 can move from the position of minimum supply to the position of maximum supply determined by the actuator 21 and corresponding to the complete insertion of the piston 24 in the cylinder 23.

The mechanical transmission means 19, connected between the acceleration command 8 and the control lever 18, comprise a yielding element 26, constituted for instance by a spring, to allow the movement of the acceleration command 8 from the position of minimum demand to the position of maximum demand even when the travel of the control lever 18 is limited by the limiting means 20.

When the control lever 18 reaches the position of maximum supply determined by the actuator 21, a further advance of the acceleration command 8 is absorbed by the yielding element 26.

The control unit 11 determines the position of the actuator 21 and hence regulates the supply of the first fuel to the cylinders 3 as a function of the number of revolutions of the engine 2 and of the position of the acceleration command 8.

Preferably this regulation takes place according to a first mapping set on the control unit 11 and providing for a plurality of possible operating conditions as a function of the position of the acceleration command 8 and of specific values of the number of engine revolutions.

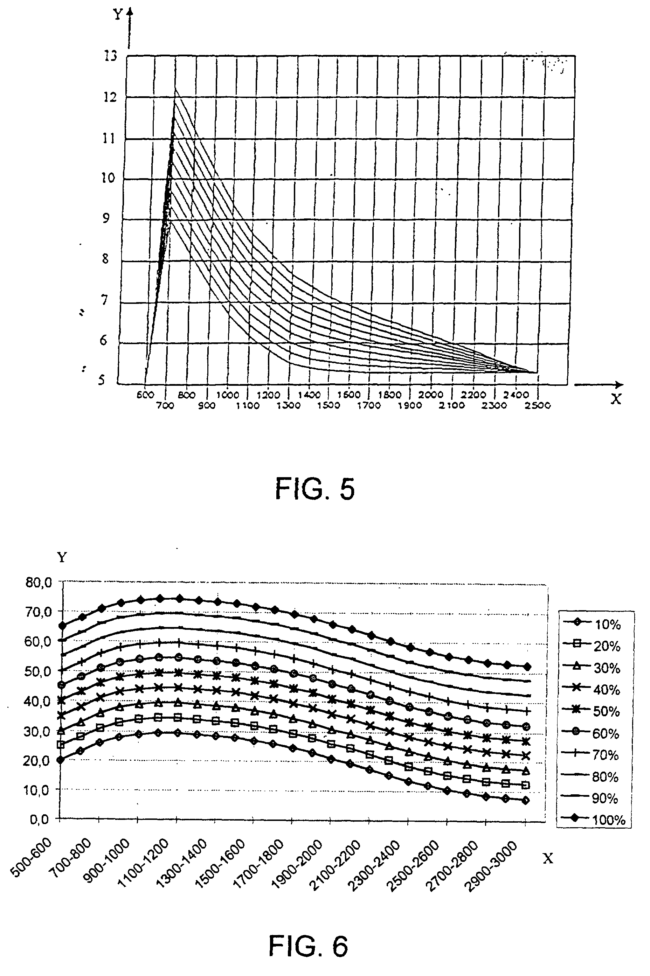

An example of said first mapping is shown in Figure 5, in which the coordinates are: along the Y axis, the percentage of opening of the control lever of the injection pump 7 referred to the maximum opening attainable under conditions of operation with only the first fuel supplied; along the X axis, the number of revolutions per minute of the drive shaft. The different curves shown correspond to different possible positions of the acceleration command 8.

The fuel supply system 1 further comprises supply means 27 to supply the second fuel to the cylinders 3, and which are constituted by the second tank 5 for the second fuel, by an inlet device 28 of the second fuel, and by an inlet conduit 29 connected between the second tank 5 and the inlet device 28.

On the inlet conduit 29 is also mounted a regulator 30 of the flow rate of the second fuel, connected to the control unit 11 and controlled thereby.

Thus the inflow of the second fuel is also regulated by the control unit 11 as a function both of the position of the acceleration command 8 and of the number of revolutions of the engine 2 measured by the first measuring device 13.

In particular this regulation also preferably takes place according to a second mapping set on the control unit 11 and providing for a plurality of possible operating conditions as a function of the position of the acceleration command 8 and of specific values of the number of engine revolutions.

An example of this second mapping is shown in Figure 6, in which the coordinates are: along the Y axis the percentage of opening of the inlet conduit of the second fuel; along the X axis the number of revolutions per minute of the drive shaft. The different curves shown correspond to different possible positions of the acceleration command 8.

Different embodiments may or may not comprise also a second detector 31 of the quality of the second fuel, also connected to the control unit 11, and constituted for instance by a probe able to evaluate the content of the second fuel within the inlet conduit 29.

If said detector is provided, the control unit 11 regulates the flow of the second fuel to the cylinders 3 as a function also of the quality of the second fuel. This can be obtained by means of an additional mapping in which the control unit 11 takes into account also the content of the second fuel.

This type of control is useful since, as the concentration of the second fuel varies, the actual quantity of second fuel injected into the cylinders 3 also varies, given a rate of opening of the regulator 30.

Means 32 for shutting off the flow of the second fuel are mounted on the inlet conduit 29 and can be operated by the control unit 11 in such a way as to operate selectively between a position of closure of the inlet conduit 29 in which the engine 2 is supplied only with the first fuel, and a condition of opening of the inlet conduit 29 in which the engine 2 is supplied with both fuels.

Advantageously the means 32 for shutting off the flow of the second fuel comprise a first and a second valve 33, 34 (preferably solenoid valves) commanded in synchronism, the first valve 33 being mounted in proximity to the second tank 5, and the second valve 34 being mounted in proximity to the inlet device 28.

When the two valves are closed, the second valve 34 allows to prevent the second fuel contained in the inlet conduit 29 from being unduly supplied to the cylinders 3, whilst the first valve 33 prevents the high pressure present within the second tank 5 from propagating to the inlet conduit 29.

In particular, in the illustrated embodiment, the first valve 33 is mounted directly on a pressure reducer 35 present along the inlet conduit 29 in proximity to the second tank 5.

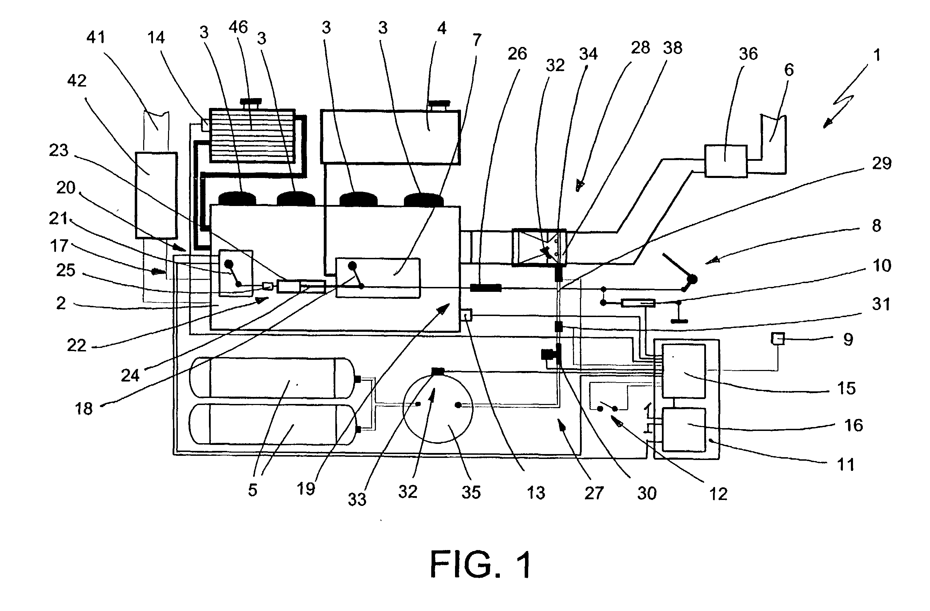

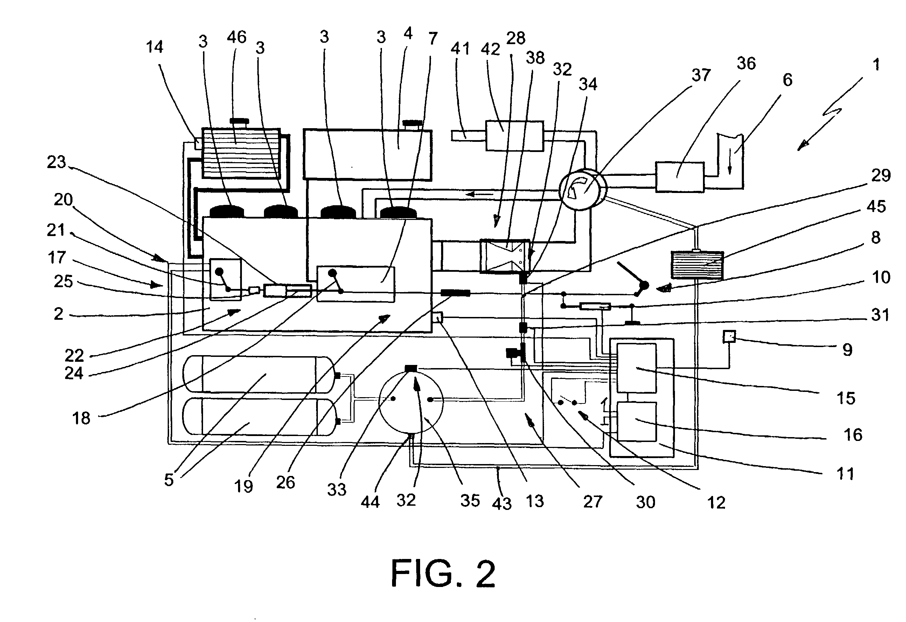

Figures 1 and 2 show the supply of the second fuel respectively for a non supercharged engine 2 and for a turbo-charged engine 2. In both cases the inlet device 28 is located downstream of the air filter 36 (in the case of the turbo-charged engine 2 also downstream of the turbine-compressor assembly 37) and in the immediate vicinity of the engine 2, to minimise the quantity of second fuel that, lying between the inlet device 28 and the cylinders 3, is unduly supplied to the engine 2 when the unit 11 commands the shift from two-fuel operation to single-fuel operation.

In both cases, the inlet device 28 is constituted by a Venturi tube 38 mounted on the air intake conduit 6, in such a way that the second fuel is aspirated into the intake conduit 6 because of the vacuum formed in the Venturi tube 38.

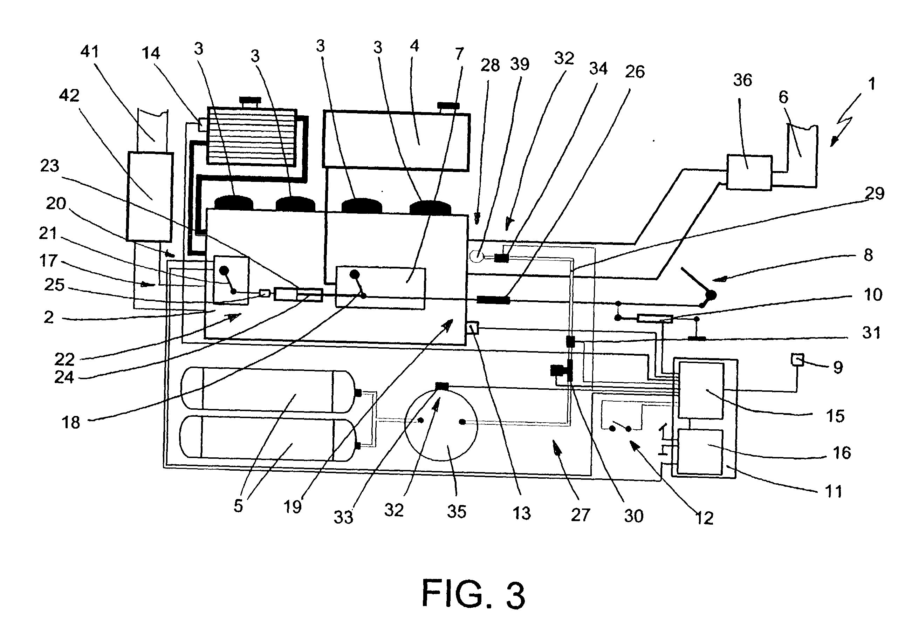

Figure 3 shows instead the use, in the system 1 of the present invention, of the technology known with the name of single-point, in which methane is injected within the air flow in proximity to the point whereat the intake conduit 6 enters into the engine 2.

In this case the inlet device 28 is constituted by an injector 39 mounted on the air intake conduit 6.

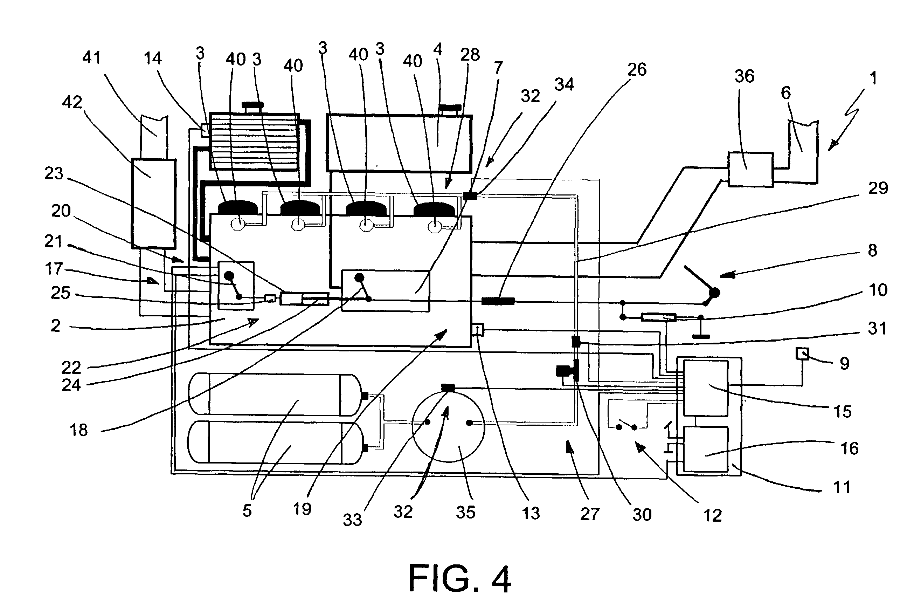

Figure 4 shows a fourth possible variation of the system 1 of the present invention, with the use of the technology known with the name of multi-point. In this case the inlet device 28 comprises a plurality of injectors 40 each mounted in proximity with a cylinder 3 for injecting the second fuel directly into each cylinder 3.

In regard to the part of the system 1 upstream of the inlet device 28, the only part that changes in the fourth different applications shown is constituted by the pressure reducer 35.

If the Venturi tube 38 is used, the pressure reducer must take the pressure of the second fuel from a value of some hundreds of bars (pressure found inside the second tank 5) to a value substantially equal to atmospheric pressure, so that the second fuel is supplied because of the vacuum created by the Venturi tube 38.

If the injectors 39, 40 are used instead, the pressure reducer 35 must take the pressure of the second fuel from the value of some hundreds of bars to a value of some bars, so that the second fuel is supplied because of the overpressure present inside the inlet conduit 29 relative to the air intake conduit 6.

In all the illustrated embodiments, moreover, a device 42 for reducing pollutants is shown on the exhaust conduit 41. To meet particular requirements, relating to the maximum allowed pollution threshold for exhaust fumes, it is also possible to use appropriate device able to cause the combustion of all fuel particles which may be present in the exhaust fumes.

If the system of the present invention is to be mounted on turbo-charged engines (Figure 2), the possibility is also provided to connect the turbine-compressor assembly 37 to the pressure reducer 35 through a connecting conduit 43 and a membrane 44 in order to balance the pressure between the air intake conduit 6 and the inlet conduit 29. In this case a cooling device 45 is also provided on the connecting conduit 43.

The system 1 for the combined fuel supply of Diesel cycle engines of the present invention is used in the following manner.

Through the operation selector 9, the desired mode is set. If the single fuel operating mode is selected, the control unit 11 makes the engine 2 operate in the traditional manner.

When instead two-fuel operation is selected, the unit 11 commands the operation of the engine 2 according to the modes programmed thereon.

The unit 11 thus receives information from the first detector 13, from the detecting device 10, from the sensor 14 and possibly from the second measuring device 31 and then simultaneously controls the limiting means 20 and the regulator 30 of the flow rate of the second fuel.

The control unit 11 is programmed to close the shut-off means 32 both in correspondence with the shift from single fuel operation to two-fuel operation, and in correspondence with particular operating conditions during two-fuel operation.

For instance, the flow of the second fuel can be shut off in correspondence with decreases in the demand of power of the acceleration command 8 communicated to the control unit 11 by the device 10 for detecting the position of said acceleration command 8, during the starting of the engine 2 until a gear is inserted, until a minimum value of the temperature of the engine 2 cooling water is reached and for engine 3 revolution numbers below a minimum threshold value of above a maximum threshold value.

In any case, depending on requirements, the programming of the control unit 11 can be removed, added or modified.

The present invention achieves important advantages.

In the first place the system obtained in accordance with the present invention guarantees a smooth operation of the engine without chugging even at high numbers of engine revolutions.

Moreover, said system allows to reduce gas wastage and undesired pollution.

Not least, the solution used for limiting the travel of the control lever of the injection pump allows for an easy mounting of the system on existing vehicles.

It should also be noted that the present invention is relatively easy to realise and that the cost connected to the realisation of the invention is not particularly high.

## Claims

1. A system for the combined supply of fuel to Diesel cycle engines having a plurality of CYLINDERS (3) operatively connected to a drive shaft, of the type comprising:
- a first tank (4) for a first fuel;
- a conduit (6) for the intake of air into the cylinders (3);
- an injection pump (7) connected to said first tank (4) and to said cylinders (3) to supply the first fuel to the cylinders (3);
- an acceleration command (8) able to be actuated by a user from a position of minimum demand for power from the engine (2) to a position of maximum demand for power from the engine (2);
- regulating means (17) for regulating the supply of the first fuel towards the cylinders (3), associated to said pump (7) and operatively connected to said acceleration command (8);
- supply means (27) for supplying a second fuel to the cylinders (3);
- a first detector (13) of the number of revolutions of the drive shaft;
- a device (10) for detecting the position of said acceleration command (8); and
- a control unit (11) in communication with said first detector (13) of the number of revolutions, and with said device (10) for detecting the position of the acceleration command (8), said unit (11) regulating the supply of the first fuel to the cylinders (3) by controlling said regulating means (17) as a function of the number of revolutions of the engine (2) and of the position of said acceleration command (8);
said control unit (11) also **REGULATING** the flow of the second fuel to the cylinders (3) by controlling said supply means (27) as a function of the position of said acceleration command (8) and of the number of revolutions of the engine (2).
said regulating means (7) **COMPRISING** a control lever (18) of the injection pump (7) able to be actuated along a regulating travel from a position of minimum supply of the first fuel to a position of maximum supply of the first fuel, mechanical transmission means (19) connected between said acceleration command (8) and said control lever (18), **CHARACTERISED IN THAT SAID REGULATING MEANS (7) COMPRISES** limiting means (20) controlled by said control unit (11) to limit said regulating travel varying said position of maximum supply,
said limiting means (20) **COMPRISING** an actuator (21) controlled by said control unit (11) and able to move from a position of non interference in which the travel of the control lever (18) is longest, to a position of maximum interception in which the travel of the control lever (18) is shortest, and a compensating element (22) connected between said actuator (21) and said control lever (18) to allow the movement of said control lever (18) between said position of minimum supply and said position of maximum supply determined by said actuator (21).

2. A system as claimed in claim **1 characterised in that** said compensating element (22) comprises a first part and a second part mutually movable, said first part being connected to said actuator (21) and said second part being connected to said control lever (18).

3. A system as claimed in claim **1 OR 2 characterised in that** said mechanical transmission means (19) comprise a yielding element (26) to allow the movement of said acceleration command (8) from said position of minimum demand to said position of maximum demand when the travel of said control lever (18) is limited by the limiting means (20).

4. A system as claimed in any of the previous claims, **characterised in that** said supply means (27) comprise a second tank (5) for the second fuel, a device (28) for the inlet of the second fuel, an inlet conduit (29) connected between said second tank (5) and said inlet device (28) and a regulator (30) of the flow rate of the second fuel mounted on said inlet conduit (29).

5. A system as claimed in claim 4 **characterised in that** said inlet device (28) comprises a Venturi tube (38) mounted on said air intake conduit (6), to aspirate the second fuel from said inlet conduit (29) into said air intake conduit (6).

6. A system as claimed in claim 4 **characterised in that** said inlet device (28) comprises and injector (39) mounted on said air intake conduit (6) to inject the second fuel into the air intake conduit (6).

7. A system as claimed in claim 4 **characterised in that** said inlet device (28) comprises a plurality of injectors (40) each mounted in proximity to a cylinder (3) to inject the second fuel into each cylinder (3).

8. A system as claimed in claim 4 **characterised in that** it further comprises means (32) for shutting off the flow of the second fuel mounted on said inlet conduit (29), able to be operated by said control unit (11) and selectively operative between a condition of closure of the inlet conduit (29) in which the engine (2) is supplied only with the first fuel, and a condition of opening of the inlet conduit (29) in which the engine (2) is supplied with both fuels.

9. A system as claimed in claim **8 characterised in that** said means (32) for shutting off the flow of the second fuel comprise a first and a second valve (34), said first valve (33) being mounted in proximity to the second tank (5), and said second valve (34) being mounted in proximity to said inlet device (28).

10. A system as claimed in claim **8 OR 9 characterised in that** said control unit (11) causes the closure of said shut-off means (32) in correspondence with decreased demand for power of said acceleration command (8) communicated to said control unit (11) by said device (10) for measuring the position of said acceleration command (8).

11. A system as claimed in claim **8 OR 9 characterised in that** said control unit (11) causes the closure of said shut-off means (32) while the engine (2) is started until a gear is coupled.

12. A system as claimed in claim **8 OR 9 characterised in that** it further comprises a sensor (14) of the engine (2) water cooling temperature connected to said control unit (11), and **in that** said control unit (11) causes the closure of said shut-off means (32) until the engine (2) cooling water reaches a minimum value.

13. A system as claimed in claim **8 OR 9**, **characterised in that** said control unit (11) causes the closure of said shut-off means (32) for numbers of engine (2) revolutions below a minimum threshold value.

14. A system as claimed in claim **8 OR 9**, **characterised in that** said control unit (11) causes the closure of said shut-off means (32) for numbers of engine (2) revolutions above a MAXIMUM threshold value.

15. A system as claimed in any of the previous claims, **characterised in that** said control unit (11) regulates the supply of the first fuel to the cylinders (3) according to a first mapping set on said control unit (11) and providing for a plurality of possible operating conditions as a function of the position of the acceleration command (8) and of specific values of the number of engine (2) revolutions.

16. A system as claimed in any of the previous claims, **characterised in that** said control unit (11) regulates the supply of the second fuel to the cylinders (3) according to a second mapping set on said control unit (11) and providing for a plurality of possible operating conditions as a function of the position of the acceleration command (8) and of specific values of the number of engine (2) revolutions.

17. A system as claimed in any of the previous claims, **characterised in that** it further comprises a second device (31) for detecting the quality of the second fuel connected to said control unit (11), and **in that** said control unit (11) regulates the flow of the second fuel to the cylinders (3) by controlling said supply means (27) as a function of the position of said acceleration command (8), of the number of revolutions of the engine (2) and of the quality of the second fuel.

18. A system as claimed in any of the previous claims, **characterised in that** it further comprises a selector (9) of the operation of the engine (2) connected to said control unit (11) and able to be switched between a first position corresponding to an operation of the engine (2) only with the first fuel and a second position corresponding to an operation of the engine (2) with both fuels.

## Patentansprüche

1. System für die kombinierte Zufuhr von Kraftstoff an nach dem Dieselverfahren arbeitende Brennkraftmaschinen, enthaltend eine Anzahl von Zylindern (3), die betriebsmässig an eine Antriebswelle angeschlossen sind, vom Typ enthaltend:
- einen ersten Tank (4) für einen ersten Kraftstoff;
- eine Leitung (6) zum Ansaugen von Luft in die Zylinder (3);
- eine Einspritzpumpe (7), angeschlossen an den genannten ersten Tank (4) und an die genannten Zylinder (3) zum Zuführen des ersten Kraftstoffs an die Zylinder (3);
- ein Beschleunigungspedal (8), das von einem Benutzer betätigt werden kann, und zwar aus einer Position der minimalen Leistungsanforderung durch den Motor (2) bis in eine Position der maximalen Leistungsanforderung durch den Motor (2);
- Regelmittel (17) um Regulieren der Zufuhr des ersten Kraftstoffs an die Zylinder (3), zugeordnet der genannten Pumpe (7) und betriebsmässig angeschlossen an das genannte Beschleunigungspedal (8);
- Zuführmittel (27) für die Zufuhr eines zweiten Kraftstoffs an die Zylinder (3);
- einen ersten Detektor (13) der Drehzahlen der Antriebswelle;
- eine Vorrichtung (10) zum Erfassen der Position des genannten Beschleunigungspedals (8); und
- eine Steuereinheit (11) in Verbindung mit dem genannten ersten Detektor (13) der Drehzahlen und mit der genannten Vorrichtung (10) zum Erfassen der Position des Beschleunigungspedals (8), wobei die genannte Einheit (11) die Zufuhr des ersten Kraftstoffs an die Zylinder (3) durch Steuerung der genannten Regelmittel (17) in Funktion der Drehzahlen des Motors (2) und der Position des genannten Beschleunigungspedals (8) regelt; wobei die genannten Regelmittel (17) einen Antriebshebel (18) der Einspritzpumpe (7) enthalten, in der Lage, entlang einer Regelstrecke von einer Position der minimalen Zufuhr des ersten Kraftstoffs bis in eine Position der maximalen Zufuhr des ersten Kraftstoffs betätigt zu werden, sowie mechanische Übertragungsmittel (19), angeschlossen zwischen dem genannten Beschleunigungspedal (8) und dem genannten Antriebshebel (18), **dadurch gekennzeichnet, dass** die genannten Regelmittel (17) Begrenzungsmittel (20) enthalten, gesteuert durch die genannte Steuereinheit (11), um den genannten Regelhub unter Veränderung der genannten Position der maximalen Zufuhr zu begrenzen;
wobei die genannten Begrenzungsmittel (20) einen Trieb (21) enthalten, gesteuert durch die genannte Steuereinheit (11) und in der Lage, sich aus einer Position des Nichteingreifens, in welcher der Hub des Antriebshebels (18) am längsten ist, in eine Position des maximalen Abfangens zu bewegen, in welcher der Hub des Antriebshebels (18) am kürzesten ist, und ein Kompensationselement (22), angeschlossen zwischen dem genannten Trieb (21) und dem genannten Antriebshebel (18), um die Bewegung des genannten Antriebshebels (18) zwischen der genannten Position der minimalen Zufuhr und der genannten Position der maximalen Zufuhr zu erlauben, festgelegt durch den genannten Trieb (21).

2. System nach Patentanspruch 1, **dadurch gekennzeichnet, dass** das genannte Kompensationselement (22) einen ersten Teil und einen zweiten Teil enthält, beide zueinander beweglich, wobei der genannte erste Teil an den genannten Trieb (21) angeschlossen und der genannte zweite Teil an den genannten Antriebshebel (18) angeschlossen ist.

3. System nach Patentanspruch 1 oder 2, **dadurch gekennzeichnet, dass** die genannten mechanischen Übertragungsmittel (19) ein nachgebendes Element (26) enthalten, um die Bewegung des genannten Beschleunigungspedals (8) aus der genannten Position der minimalen Anforderung in die genannte Position der maximalen Anforderung zu ermöglichen, wenn der Hub des genannten Antriebshebels (18) durch die Begrenzungsmittel (20) begrenzt wird.

4. System nach einem beliebigen der vorstehenden Patentansprüche, **dadurch gekennzeichnet, dass** die genannten Zuführmittel (27) einen zweiten Tank (5) für den zweiten Kraftstoff enthalten, eine Vorrichtung (28) zum Einlassen des zweiten Kraftstoffs, eine Einlassleitung (29), angeschlossen zwischen dem genannten zweiten Tank (5) und der genannten Einlassvorrichtung (28), und einen Regler (30) für den Durchfluss des zweiten Kraftstoffs, montiert an der genannten Einlassleitung (29).

5. System nach Patentanspruch 4, **dadurch gekennzeichnet, dass** die genannte Einlassvorrichtung (28) ein Venturirohr (38) enthält, montiert an der genannten Luftansaugleitung (6), um den zweiten Kraftstoff aus der genannten Einlassleitung (29) in die genannte Ansaugleitung (6) anzusaugen.

6. System nach Patentanspruch 4, **dadurch gekennzeichnet, dass** die genannte Einlassvorrichtung (28) eine Einspritzdüse (39) enthält, montiert an der genannten Luftansaugleitung (6), um den zweiten Kraftstoff in die Luftansaugleitung (6) einzuspritzen.

7. System nach Patentanspruch 1, **dadurch gekennzeichnet, dass** die genannte Einlassvorrichtung (28) eine Anzahl von Einspritzdüsen (40) enthält, jede montiert in der Nähe eines Zylinders (3), um den zweiten Kraftstoff in jeden Zylinder (3) einzuspritzen.

8. System nach Patentanspruch 4, **dadurch gekennzeichnet, dass** es ausserdem Mittel (32) zum Absperren des Flusses des zweiten Kraftstoffs enthält, montiert an der genannten Einlassleitung (29) und in der Lage, durch die genannte Steuereinheit (11) betätigt zu werden und wahlweise betriebsfähig zwischen einem Zustand des Verschliessens der Einlassleitung (29), in welchem der Motor (2) nur mit dem ersten Kraftstoff gespeist wird, und einem Zustand des Öffnens der Einlassleitung (29), in welchem der Motor mit beiden Kraftstoffen gespeist wird.

9. System nach Patentanspruch 8, **dadurch gekennzeichnet, dass** die genannten Mittel (32) zum Absperren des Flusses des zweiten Kraftstoffs ein erstes und ein zweites Ventil (34) enthalten, wobei das genannte erste Ventil (33) in der Nähe des zweiten Tanks (5) montiert ist, und wobei das genannte zweite Ventil (34) in der Nähe der genannten Einlassvorrichtung (28) montiert ist.

10. System nach Patentanspruch 8 oder 9, **dadurch gekennzeichnet, dass** die genannte Steuereinheit (11) das Schliessen der genannten Absperrmittel (32) bei abnehmender Leistungsanforderung durch das genannte Beschleunigungspedal (8) bewirkt, was der genannten Steuereinheit (11) durch die genannte Vorrichtung (10) zum Erfassen der Position des genannten Beschleunigungspedals (8) signalisiert wird.

11. System nach Patentanspruch 8 oder 9, **dadurch gekennzeichnet, dass** die genannte Steuereinheit (11) während des Startens des Motors (2) das Schliessen der genannten Absperrmittel (32) bis zum Einlegen eines Ganges bewirkt.

12. System nach Patentanspruch 8 oder 9, **dadurch gekennzeichnet, dass** es ausserdem einen Fühler (14) für die Kühlwassertemperatur des Motors (2) enthält, angeschlossen an die genannte Steuereinheit (11), und **dadurch,** dass die genannte Steuereinheit (11) das Schliessen der genannten Absperrmittel (32) bewirkt, bis nicht die Kühlwassertemperatur des Motors (2) einen Mindestwert erreicht hat.

13. System nach Patentanspruch 8 oder 9, **dadurch gekennzeichnet, dass** die genannte Steuereinheit (11) das Schliessen der genannten Absperrmittel (32) bei Drehzahlen des Motors (2) unterhalb eines minimalen Schwellenwertes bewirkt.

14. System nach Patentanspruch 8 oder 9, **dadurch gekennzeichnet, dass** die genannte Steuereinheit (11) das Schliessen der genannten Absperrmittel (32) bei Drehzahlen des Motors (2) oberhalb eines maximalen Schwellenwertes bewirkt.

15. System nach einem beliebigen der vorstehenden Patentansprüche, **dadurch gekennzeichnet, dass** die genannte Steuereinheit (11) die Zufuhr des ersten Kraftstoffs an die Zylinder (3) nach einer ersten Tabelle regelt, die an der genannten Steuereinheit eingegeben ist, und die eine Anzahl von möglichen Betriebszuständen in Funktion der Position des Beschleunigungspedals (8) und der spezifischen Werte des Drehzahlen des Motors (2) vorsieht.

16. System nach einem beliebigen der vorstehenden Patentansprüche, **dadurch gekennzeichnet, dass** die genannte Steuereinheit (11) die Zufuhr des zweiten Kraftstoffs an die Zylinder (3) nach einer zweiten Tabelle regelt, die an der genannten Steuereinheit (11) eingegeben ist, und die eine Anzahl von möglichen Betriebszuständen in Funktion der Position des Beschleunigungspedals (8) und der spezifischen Werte des Drehzahlen des Motors (2) vorsieht.

17. System nach einem beliebigen der vorstehenden Patentansprüche, **dadurch gekennzeichnet, dass** es ausserdem eine zweite Vorrichtung (31) zum Erfassen der Qualität des zweiten Kraftstoffs enthält, angeschlossen an die genannte Steuereinheit (11), und dadurch, dass die genannte Steuereinheit (11) den Durchfluss des zweiten Kraftstoffs an die Zylinder (3) durch Steuern der genannten Zuführmittel (27) regelt, und zwar in Funktion der Position des genannten Beschleunigungspedals (8), der Drehzahl des Motors (2) und der Qualität des zweiten Kraftstoffs.

18. System nach einem beliebigen der vorstehenden Patentansprüche, **dadurch gekennzeichnet, dass** es ausserdem einen Wahlschalter (9) des Betriebes des Motors (2) enthält, angeschlossen an die genannte Steuereinheit (11) und in der Lage, zwischen einer ersten Position, entsprechend einem Betrieb des Motors (2) mit nur dem ersten Kraftstoff, und einer zweiten Position, entsprechend einem Betrieb des Motors (2) mit beiden Kraftstoffen, umgeschaltet zu werden.

## Revendications

1. Un système pour l'alimentation combinée de carburant aux moteurs à cycle diesel ayant plusieurs CYLINDRES (3) raccordés opérationnellement à un arbre de transmission, du type qui inclut :
- un premier réservoir (4) pour un premier carburant ;
- un conduit (6) d'admission d'air dans les cylindres (3) ;
- une pompe d'injection (7) raccordée audit premier réservoir (4) et auxdits cylindres (3) pour alimenter les cylindres (3) avec le premier carburant ;
- une commande d'accélération (8) pouvant être actionnée par un utilisateur d'une position de demande minimale d'énergie de la part du moteur (2) à une position de demande maximale d'énergie de la part du moteur (2) ;
- des moyens de régulation (17) permettant de régler l'alimentation du premier carburant aux cylindres (3), associés à ladite pompe (7) et raccordés opérationnellement à ladite commande d'accélération (8) ;
- des moyens d'alimentation (27) pour alimenter les cylindres (3) avec le second carburant ;
- un premier capteur (13) du nombre de tours de l'arbre de transmission ;
- un dispositif (10) de détection de la position de ladite commande d'accélération (8) et
- une unité de commande (11) qui communique avec ledit premier capteur (13) du nombre de tours et avec ledit dispositif (10) de détection de position de la commande d'accélération (8), ladite unité (11) réglant l'alimentation des cylindres (3) avec le premier carburant en contrôlant lesdits moyens de réglage (17) en fonction du nombre de tours du moteur (2) et de la position de ladite commande d'accélération (8) ;
- ladite unité de commande (11) REGLANT également le débit du second carburant vers les cylindres (3) en contrôlant lesdits moyens d'alimentation (27) en fonction de la position de ladite commande d'accélération (8) et le nombre de tours du moteur (2) ;
- lesdits moyens de réglage (17) COMPRENANT un levier de commande (18) de la pompe d'injection (7) pouvant être actionné suivant une course de réglage allant d'une position d'alimentation minimale du premier carburant à une position d'alimentation maximale du premier carburant, des moyens de transmission mécaniques (19) placés entre ladite commande d'accélération (8) et ledit levier de commande (18), **CARACTÉRISÉ EN CE QUE** LESDITS MOYENS DE RÉGLAGE (7) INCLUENT des moyens limitants (20) pilotés par ladite unité de commande (11) pour limiter ladite course de réglage qui varie ladite position d'alimentation maximale ;
- lesdits moyens limitants (20) COMPRENANT un actionneur (21) piloté par ladite unité de commande (11) et en mesure de se déplacer d'une position de non-interférence où la course du levier de commande (18) est au maximum, à une position d'interception maximale où la course du levier de commande (18) est au minimum, et un élément de compensation (22) placé entre ledit actionneur (21) et ledit levier de commande (18) pour permettre le mouvement dudit levier de commande (18) entre ladite position d'alimentation minimale et ladite position d'alimentation maximale déterminé par ledit actionneur (21).

2. Un système selon la revendication 1, **caractérisé en ce que** ledit élément de compensation (22) inclut une première partie et une seconde partie mutuellement déplaçable, ladite première partie étant raccordée audit actionneur (21) et ladite seconde partie étant raccordée audit levier de commande (18).

3. Un système selon la revendication 1 OU 2, **caractérisé en ce que** lesdits moyens de transmission mécaniques (19) incluent un élément élastique (26) pour permettre le mouvement de ladite commande d'accélération (8) de ladite position de demande minimale à ladite position de demande maximale lorsque la course dudit levier de commande (18) est limitée par les moyens limitants (20).

4. Un système selon toutes les revendications précédentes, **caractérisé en ce que** lesdits moyens d'alimentation (27) incluent un second réservoir (5) pour le second carburant, un dispositif (28) pour l'admission du second carburant, un conduit d'entrée (29) placé entre ledit second réservoir (5) et ledit dispositif d'entrée (28) et un régulateur (30) de débit du second carburant monté sur ledit conduit (29).

5. Un système selon la revendication 4, **caractérisé en ce que** ledit dispositif d'entrée (28) inclut un tube Venturi (38) installé sur ledit conduit d'admission d'air (6) pour aspirer le second carburant dudit conduit d'entrée (29) audit conduit d'admission d'air (6).

6. Un système selon la revendication 4, **caractérisé en ce que** ledit dispositif d'entrée (28) inclut un injecteur (39) installé sur ledit conduit d'admission d'air (6) pour injecter le second carburant dans le conduit d'admission d'air (6).

7. Un système selon la revendication 4, **caractérisé en ce que** ledit dispositif d'entrée (28) inclut plusieurs injecteurs (40) chacun étant installé à proximité d'un cylindre (3) pour injecter le second carburant dans chaque cylindre (3).

8. Un système selon la revendication 4, **caractérisé en ce qu'**il inclut également un moyen (32) de fermeture de débit du second carburant installé sur ledit conduit d'entrée (29), pouvant être actionné par ladite unité de commande (11) et sélectivement opérationnel entre un état de fermeture du conduit d'entrée (29) où le moteur (2) est alimenté avec le premier carburant uniquement et un état d'ouverture du conduit d'entrée (29) où le moteur (2) est alimenté avec les deux carburants.

9. Un système selon la revendication 8, **caractérisé en ce que** lesdits moyens (32) de fermeture de débit du second carburant incluent une première et une seconde soupape (34), ladite première soupape (33) étant montée à proximité du second réservoir (5) et ladite seconde soupape (34) étant montée à proximité dudit dispositif d'entrée (28).

10. Un système selon la revendication 8 OU 9, **caractérisé en ce que** ladite unité de commande (11) provoque la fermeture desdits moyens de fermeture (32) au moment où la demande de puissance de ladite commande d'accélération (8) diminue, la réduction étant communiquée à ladite unité de commande (11) par ledit dispositif (10) de mesure de la position de ladite commande d'accélération (8).

11. Un système selon la revendication 8 OU 9, **caractérisé en ce que** ladite unité de commande (11) provoque la fermeture desdits moyens de fermeture (32) lorsque le moteur (2) démarre jusqu'à ce qu'une vitesse soit passée.

12. Un système selon la revendication 8 OU 9, **caractérisé en ce qu'**il inclut également un capteur (14) de température de l'eau de refroidissement du moteur (2) raccordé à ladite unité de commande (11), et **en ce que** ladite unité de commande (11) provoque la fermeture desdits moyens de fermeture (32) jusqu'à ce que la température de l'eau de refroidissement du moteur (2) atteigne une valeur minimale.

13. Un système selon la revendication 8 OU 9, **caractérisé en ce que** ladite unité de commande (11) provoque la fermeture desdits moyens de fermeture (32) lorsque le nombre de tours du moteur (2) est au-dessous du seuil minimal.

14. Un système selon la revendication 8 OU 9, **caractérisé en ce que** ladite unité de commande (11) provoque la fermeture desdits moyens de fermeture (32) lorsque le nombre de tours du moteur (2) est au-dessus d'un seuil maximal.

15. Un système selon toutes les revendications précédentes, **caractérisé en ce que** ladite unité de commande (11) règle l'alimentation des cylindres (3) avec le premier carburant suivant un premier mappage de ladite unité de commande (11) et fournit plusieurs états de fonctionnement différents en fonction de la position de la commande d'accélération (8) et des valeurs spécifiques du nombre de tours du moteur (2).

16. Un système selon toutes les revendications précédentes, **caractérisé en ce que** ladite unité de commande (11) règle l'alimentation des cylindres (3) avec le second carburant suivant un second mappage de ladite unité de commande (11) et en prévoyant un grand nombre d'états de fonctionnement possibles en fonction de la position de la commande d'accélération (8) et des valeurs spécifiques du nombre de tours du moteur (2).

17. Un système selon toutes les revendications précédentes, **caractérisé en ce qu'**il inclut également un second dispositif (31) de détection de la qualité du second carburant raccordé à ladite unité de commande (11), et **en ce que** ladite unité de commande (11) règle le débit du second carburant aux cylindres (3) en contrôlant lesdits moyens d'alimentation (27) en fonction de la position de ladite commande d'accélération (8), du nombre de tours du moteur (2) et de la qualité du second carburant.

18. Un système selon toutes les revendications précédentes, **caractérisé en ce qu'**il inclut également un sélecteur (9) de fonctionnement du moteur (2) raccordé à ladite unité de commande (11) et pouvant passer d'une première position correspondant au fonctionnement du moteur (2) uniquement avec le premier carburant à une seconde position correspondant au fonctionnement du moteur (2) avec les deux carburants.
